# EUROPÄISCHE PATENTSCHRIFT

(11) **EP 2 004 318 B1**
(45) Veröffentlichungstag und Bekanntmachung des Hinweises auf die Patenterteilung: **24.07.2019**
(21) Anmeldenummer: 07722099.4
(22) Anmeldetag: 24.03.2007
(51) Int. Cl.: B01J 4/00, B01J 8/02, B01J 19/00, C01B 3/38, B01B 1/00

(54) **VERFAHREN ZUM VERDAMPFEN EINES FLÜSSIGEN KRAFTSTOFFS**
PROCESS FOR EVAPORATING A LIQUID FUEL
PROCEDE DE VAPORISATION D'UN CARBURANT LIQUIDE

(30) Priorität: 11.04.2006 DE 102006016912
(43) Veröffentlichungstag der Anmeldung: 24.12.2008
(73) Patentinhaber: Forschungszentrum Jülich GmbH, 52425 Jülich (DE)
(72) Erfinder: PORS, Zdenek, 52428 Jülich (DE); TSCHAUDER, Andreas, 49492 Westerkappeln (DE); PASEL, Joachim, 52428 Jülich (DE); PETERS, Ralf, 52146 Würselen (DE); STOLTEN, Detlef, 52076 Aachen (DE)
(86) Internationale Anmeldenummer: PCT/DE2007/000540
(87) Internationale Veröffentlichungsnummer: WO 2007/115529

(56) Entgegenhaltungen:
- EP-A- 1 304 310
- EP-A- 1 712 771
- WO-A-00/10911
- WO-A-2006/053534
- DE-A1-102004 041 815

## Beschreibung

Die Erfindung betrifft ein Verfahren zum Verdampfen eines flüssigen Kraftstoffs, welches insbesondere zur Herstellung eines Kraftstoff-Oxidationsmittel-Gemisches geeignet ist.

### Stand der Technik

Neben der klassischen Dampfreformierung zur Wasserstoffproduktion stellt die autotherme Reformierung eine vielversprechende Alternative dar. Dabei reagiert ein Sauerstoff-Wasser-Gemisch im Reaktor ohne externe Wärmequelle mit Kohlenwasserstoff CₙHₘ entsprechend folgender Gleichungen:

CₙHₘ + nH₂O → n CO + (m/2 + n)H₂ ΔH_{R} > 0 (Dampfreformierung)

CₙHₘ + n/2O₂ → m/2H₂ + nCO ΔH_{R} < 0 (partielle Oxidation)

Für Methan CH₄ (n = 1, m = 4) stellen sich die Reaktionsgleichungen wie folgt dar:

CH₄ + H₂O => CO + 3H₂ ΔH_{R} = + 206 kJ/mol

CH₄ + 0,5 O₂ => CO + 2H₂ ΔH_{R} = - 35 kJ/mol

Der Sauerstoff wird in der Regel mittels Luft bereitgestellt. Die Wärme, die für die Dampfreformierung notwendig ist, wird durch die partielle Oxidation des Kohlenwasserstoffs zur Verfügung gestellt. Der Prozess kann somit in einem autothermen Betriebsmodus gefahren werden. Prinzipiell ist ein höherer Wirkungsgrad möglich, da systembezogene Enthalpieverluste nur durch den warmen Produktgasstrom möglich sind. Besonders für den Gebrauch von Brennstoffzellensystemen als Fahrzeugantrieb mit Benzin oder Diesel als Kraftstoff scheint die autotherme Reformierung sehr vielversprechend. Dies ist durch die hohe Reaktionstemperatur (ca. 800°C) und eine gute Reaktionskinetik zu erklären.

Neben der Entwicklung von geeigneten Katalysatoren für die autotherme Reformierung von Mitteldestillaten hängt die Einsatzfähigkeit eines Reformers wesentlich davon ab, ob optimierte Betriebsbedingungen eingestellt werden können. Die Reformierung von flüssigen Kraftstoffen stellt hohe Ansprüche an die Vorbereitung der Edukte, bevor sie in die Reaktionszone des Reaktors, d. h. des Reformers eintreten.

Eine schlechte Qualität des Eduktgemisches hat regelmäßig eine negative Wirkung auf den Umsatz des Kraftstoffs, da sich in der Reaktionszone Ruß und so genannte "Hot Spots" bilden. Um diese Probleme zu vermeiden, ist es insbesondere wichtig, dass die O₂/C- und H₂O/C-Verhältnisse im Gemisch möglichst konstant bleiben und nicht schwanken. Teilweise bildet sich auch bereits bei der Herstellung des Eduktgemisches Ruß, der sich in der Mischkammer ablagert.

Die Mischkammer eines Reformers hat daher die folgenden Funktionen:
- Zuführung des Kraftstoffs
- Zerstäubung und Verdampfung des Kraftstoffs
- Gemischbildung (Homogenisierung der Kraftstoffkonzentration im Luft-Dampf-Strom)
- Homogenisierung der Durchflussverteilung (Fließgeschwindigkeitsprofil)

Aus der WO 00/10911 ist eine Mischkammer bekannt, in der Kraftstoff mit Hilfe von überhitztem Wasserdampf verdampft und in einem zweiten Bereich mit Luft durchmischt wird. Nachteilig ist mit einer solchen Mischkammer die Verdampfung der schwer siedenden Komponenten einiger flüssiger Kraftstoffe wie Diesel oder Heizöl sehr schwierig. Wird der Kraftstoff nur durch den direkten Wärmeaustausch mit einem heißen Gas verdampft, verdampfen zuerst nur die leicht siedenden Komponenten. Da dem Gas hierfür große Energiemengen entzogen werden, sinkt die Gastemperatur fortwährend ab, so dass sie nicht mehr ausreicht, um die schwer siedenden Komponenten zu verdampfen. Daher können komplexe Kraftstoffe auf diese Weise in der Regel nur unvollständig verdampft werden.

Die DE 198 60 308 A1 offenbart ein Verfahren zur Verwertung eines Brennstoffs, bei dem als Wärmequelle für die Verdampfung des flüssigen Kraftstoffs die so genannte "Kalte Flamme" als genau definierte exotherme Reaktion genutzt wird. Nachteilig besteht bei diesem Verfahren die Gefahr der Rußbildung, falls eine Reaktion zwischen dem Oxidanten und dem flüssigen Kraftstoff zündet.

In der US 5,826,422 wird ein Teil des Kraftstoffs verbrannt, um die für die Verdampfung notwendige Wärme zu erzeugen. Nachteilig wird auch bei dieser klassischen Verbrennung Ruß gebildet.

Aus EP 1 304 310 A und WO2006/053534 sind weitere Verfahren zum Verdampfen von flüssigen Kraftstoffen bekannt.

### Aufgabe und Lösung

Aufgabe der Erfindung ist daher, ein Verfahren zur vollständigen Verdampfung eines komplexen flüssigen Kraftstoffs ohne Rußbildung, insbesondere zur Herstellung eines Kraftstoff-Oxidationsmittel-Gemisches für einen Reformer, zur Verfügung zu stellen. Das Verfahren sollte auch schwer siedende Bestandteile flüssiger Kraftstoffe verdampfen. Das Endprodukt des Verfahrens sollte eine solche Qualität aufweisen, dass auch bei seiner Umsetzung in einem nachgeschalteten Reformer kein Ruß entsteht.

Diese Aufgaben werden erfindungsgemäß gelöst durch ein Verfahren gemäß Hauptanspruch. Weitere vorteilhafte Ausgestaltungen ergeben sich aus den jeweils darauf rückbezogenen Unteransprüchen.

### Gegenstand der Erfindung

Im Rahmen der Erfindung wurde ein Verfahren gefunden, mit dem ein flüssiger Kraftstoff auch dann vollständig verdampft werden kann, wenn er schwer siedende Komponenten enthält. Beispielsweise enthalten Diesel und Benzin solche schwer siedenden Komponenten. Es wurde erkannt, dass sich der Kraftstoff, wie im Folgenden dargestellt, in zwei Stufen verdampfen lässt.

Welche Bestandteile leicht, beziehungsweise schwer siedend sind, wird üblicherweise bei jedem Kraftstoff anders definiert. Bei Diesel werden Komponenten als schwer siedend bezeichnet, wenn ihre Siedetemperatur höher als 350 bis 400°C liegt. Dementsprechend werden Komponenten mit einer Siedetemperatur bis etwa 300°C als leicht siedende Komponenten bezeichnet.

In der ersten Stufe wird der Kraftstoff durch Wärmekontakt mit einem primären Medium teilweise verdampft. Als primäres Medium ist jedes Medium geeignet, das eine höhere Temperatur aufweist als die Verdampfungstemperatur des Kraftstoffs und keine chemische Reaktion mit dem Kraftstoff eingeht.

Bei einem Gemisch aus mehreren Komponenten versteht man unter der Verdampfungstemperatur des Gemisches die mittlere Verdampfungstemperatur seiner Komponenten.

Vorzugsweise handelt es sich bei dem primären Medium um überhitzten Wasserdampf. Durch den direkten Wärmeaustausch mit dem primären Medium können in der Regel zwischen 50 und 99 Prozent, insbesondere zwischen 70 und 90 Prozent, der gesamten Kraftstoffmenge verdampft werden. Wenn es sich bei dem Kraftstoff um ein Mehrstoffgemisch handelt, wie beispielsweise Diesel oder Benzin, verdampfen in der ersten Stufe vor allem die leicht siedenden Komponenten des Kraftstoffs, im Falle von Diesel diejenigen Komponenten mit einer Siedetemperatur unterhalb 300°C. In der ersten Stufe findet keine chemische Reaktion zwischen dem Kraftstoff und dem primären Medium statt.

Nach der ersten Stufe wird dem Kraftstoff ein oxidierendes sekundäres Medium zugeführt, bei dem es sich insbesondere um Luft handeln kann. Das sekundäre Medium kann bis auf 400°C vorgewärmt werden, wird jedoch vorzugsweise mit Umgebungstemperatur zugeführt. Wird auf eine Vorwärmung verzichtet, hat das Gesamtsystem einen höheren Wirkungsgrad, und es wird außerdem vorteilhaft der für die Vorwärmung notwendige Wärmetauscher eingespart. Wenn das sekundäre Medium auf das Gemisch von primärem Medium, bereits verdampftem Kraftstoffanteil und noch unverdampftem Kraftstoffanteil trifft, reagiert es exotherm mit dem bereits verdampften Kraftstoffanteil, der mit dem primären Medium vorgemischt ist. Dieser wird teilweise oxidiert.

Ob das sekundäre Medium vorgewärmt werden muss oder nicht, hängt von der Konstruktion der Anordnung ab, in der das Verfahren durchgeführt wird. Es müssen derartige Bedingungen herrschen, dass die teilweise Oxidation zündet. Insbesondere muss die Aktivierungsenergie für diese Oxidation zur Verfügung stehen.

Der verdampfte Kraftstoff oxidiert ausdrücklich nur teilweise und keinesfalls vollständig. Darunter ist eine Umsetzung des Kraftstoffs zu verstehen, die weniger Energie freisetzt als die totale Verbrennung der umgesetzten Kraftstoffmenge. Bei der teilweisen Oxidation entstehen als Reaktionsprodukte oxidierte und nicht oxidierte Kohlenwasserstoffe, wie beispielsweise Formaldehyd, Acetaldehyd oder Alkohole, sowie Kohlenmonoxid und Wasserstoff. Diese Reaktionsprodukte können in der nachgeschalteten Reformierung noch zu einem wasserstoffreichen Gas umgesetzt werden. Reaktionsprodukte der totalen Verbrennung (Wasser und Kohlendioxid) können dagegen bei der weiteren Reformierung nicht mehr zu einem wasserstoffreichen Gas umgesetzt werden.

Um eine nur teilweise Oxidation des Kraftstoffs herbeizuführen, reicht es nicht aus, die Oxidation unter Sauerstoffmangel durchzuführen. Bei einer Oxidation unter Sauerstoffmangel wird nur ein Teil des Kraftstoffs umgesetzt, dieser Teil wird jedoch vollständig verbrannt. Für eine nur teilweise Oxidation muss dagegen der Reaktionsablauf der Oxidation, in unserem Fall bei Erreichen einer Temperatur zwischen etwa 500 und 600°C, unterbrochen werden. Dies kann über die Temperatur und das Strömungsprofil der Reaktionspartner sowie über die Dauer ihrer Wechselwirkung gesteuert werden.

Die noch unverdampften Kraftstoffanteile beteiligen sich an dieser Reaktion nicht. Dies ist dadurch bedingt, dass der bereits verdampfte Kraftstoff eine höhere Tendenz zur Zündung aufweist als der noch nicht verdampfte. Träfe das Oxidationsmittel nicht auf Kraftstoffdämpfe, würde der nicht verdampfte Kraftstoff zünden, wie beispielsweise in der DE 198 60 308 A1.

Durch die exotherme Reaktion entsteht Wärme, durch die in der zweiten Stufe des Verfahrens der noch unverdampfte Kraftstoffanteil vorteilhaft vollständig verdampft wird.

Handelt es sich bei dem Kraftstoff um ein Mehrstoffgemisch, verdampfen hier die schwer siedenden Komponenten (bei Diesel beispielsweise die Komponenten mit einer Siedetemperatur oberhalb von 300°C).

Der entscheidende Vorteil gegenüber Verdampfungsverfahren nach dem Stand der Technik besteht darin, dass der Kraftstoff vollständig verdampft wird und zugleich eine Rußbildung vermieden wird. Dadurch entsteht ein Gemisch aus Kraftstoffdampf, Wasserdampf und Luft, das sich besonders für die Reformierung des Kraftstoffs zu einem wasserstoffreichen Gas eignet. Verdampfer, die das erfindungsgemäße Verfahren verwenden, müssen nicht regelmäßig von Ruß gereinigt werden, was in der Regel mit einer Betriebsunterbrechung einhergeht. Zugleich wird durch die hohe Qualität des Gemisches der Edukte Kraftstoffdampf, Wasserdampf und Luft auch eine Rußbildung bei seiner Umsetzung in einem nachgeschalteten Reformer vermieden. Gelänge Ruß als Abfallprodukt der Verdampfung in den Reformer oder entstünde er bei der Umsetzung des Kraftstoffdampfs im Katalysator, würde durch ihn die Aktivfläche des Katalysators blockiert. Die Nutzung der oben erwähnten exothermen Reaktion verbessert die Wärmebilanz des Systems gegenüber den Systemen, die zur Kraftstoffverdampfung ausschließlich Wärmetauscher benutzen. Gleichzeitig sinkt dadurch nicht die Wasserstoffausbeute wie in den Systemen, in denen ein Teil des Kraftstoffs verbrannt wird.

Die teilweise Oxidation des bereits verdampften Kraftstoffs verbraucht einen Teil der im Kraftstoff enthaltenen Energie. Dafür tragen auch die schwer siedenden Komponenten des Kraftstoffs zum am Ende des Verfahrens entstehenden Kraftstoffdampf bei. Nach dem Stand der Technik waren diese Komponenten nicht nutzbar, sondern mussten im Gegenteil sogar als Abfallprodukt aus dem Verdampfer abgeschieden werden. Da nunmehr auch diese Komponenten verdampft werden, enthält der mit dem erfindungsgemäßen Verfahren aus einer gegebenen Kraftstoffmenge hergestellte Dampf in der Regel genauso viel Kraftstoff wie bei einem Verzicht auf die zweite Stufe. Sofern unerwünschterweise ein Teil des Kraftstoffs in der zweiten Stufe vollständig verbrennt, gehen dabei höchstens bis zu 2,5 Prozent des Kraftstoffs verloren. In beiden Fällen bietet das erfindungsgemäße Verfahren den Vorteil, dass keinerlei Abfallprodukte entstehen, die aus dem Verdampfer abgeschieden werden müssen.

Vorteilhaft wird der Kraftstoff vor der ersten Stufe fein zerstäubt. Dies kann beispielsweise durch eine Zerstäubungsdüse oder einen Injektor bewirkt werden. Durch das Zerstäuben wird die Oberfläche des Kraftstoffs maximiert, was den Wärmeübertrag vom primären Medium auf den Kraftstoff verbessert.

Vorteilhaft weist das primäre Medium vor dem Kontakt mit dem Kraftstoff eine Temperatur unterhalb von 700°C, insbesondere unterhalb von 500°C, auf. Dadurch wird bei gleicher Verdampfungsleistung Energie eingespart. Zugleich wird der Anlagenteil, in dem das Verfahren durchgeführt wird, thermisch weniger belastet.

Um intensive Durchmischung des Kraftstoffs mit dem primären Medium zu erzielen, sollte das primäre Medium möglichst nah zum Einspritzpunkt des Kraftstoffs zugeführt werden. Eine Rotation des Gasstroms ist für die Vermischung ebenso von Vorteil.

Vorteilhaft strömt das sekundäre Medium dem teilweise verdampften, mit dem primären Medium vermischten Kraftstoff entgegen. Dadurch wird die Durchmischung des Kraftstoffs mit dem sekundären Medium verbessert und seine Verteilung in der Vorrichtung, in der das Verfahren durchgeführt wird, homogenisiert. Dies stellt sicher, dass überall dort, wo noch unverdampfter Kraftstoff vorhanden ist, auch die partielle Oxidation stattfindet und die Wärme für die Verdampfung des unverbrannten Kraftstoffs bereitstellt.

Die erste Stufe der Verdampfung erfolgt in einer primären Verdampfungszone und die zweite Stufe in einer davon räumlich beabstandeten sekundären Verdampfungszone. Dadurch wird gewährleistet, dass sich die beiden Stufen nicht gegenseitig stören.

In einer besonders vorteilhaften Ausgestaltung der Erfindung wird der in einem ersten Bereich (Verdampfer) erfindungsgemäß verdampfte und teilweise oxidierte Kraftstoff in einem davon räumlich beabstandeten Bereich mit einem Oxidationsmittel durchmischt. Es wurde erkannt, dass sich durch diese Kombination von Maßnahmen auch aus minderwertigen Kraftstoffen ein homogenes Kraftstoff-Oxidationsmittel-Gemisch für einen Reformer herstellen lässt.

Unter minderwertigen Kraftstoffen sind solche Kraftstoffe zu verstehen, die einen hohen Anteil schwer siedender Komponenten enthalten.

Das Oxidationsmittel kann insbesondere mit dem für die Verdampfung verwendeten oxidierenden sekundären Medium identisch sein. Es kann aber auch einen anderen Sauerstoffgehalt aufweisen als dieses sekundäre Medium. Über den Sauerstoffgehalt des Oxidationsmittels kann sichergestellt werden, dass Kraftstoff und Oxidationsmittel nach der Verdampfung nur noch mit dem Oxidationsmittel durchmischt werden und nicht mehr mit ihm reagieren.

Unter einem Bereich ist ein räumliches Gebiet zu verstehen, das insbesondere durch ein Reaktionsgefäß definiert sein kann.

Durchmischung mit dem Oxidationsmittel schließt ausdrücklich den Fall ein, dass der Kraftstoff sich nach seiner vollständigen Verdampfung noch im Verdampfer mit dem noch nicht reagierten Anteil des sekundären Mediums vermischt, ohne dass von außen weiteres Oxidationsmittel zugeführt wird.

Durch die räumliche Trennung von Verdampfung und Vermischung kann dem Kraftstoffdampf bei der Vermischung gerade so viel Sauerstoff zugeführt werden, dass sich Oxidationsmittel und verdampfter Kraftstoff zwar möglichst homogen durchmischen, jedoch nicht miteinander reagieren. Eine Reaktion zwischen Kraftstoff und Oxidationsmittel findet nur während der teilweisen Oxidation im Verdampfer statt, nicht aber im dem Verdampfter nachgeschalteten Bereich. Zusätzlich können weitere Parameter der Durchmischung im Hinblick auf ein letztendlich möglichst homogenes Kraftstoff-Oxidationsmittel-Gemisch optimiert werden, ohne die Verdampfung des Kraftstoffs zu stören.

Die Qualität eines Kraftstoff-Luft-Gemisches im Sinne einer Reformierbarkeit zu einem wasserstoffreichen Gas lässt sich an der Wasserstoffausbeute pro Einheit Primärbrennstoff messen. Diese Ausbeute wird durch die Einführung der zweiten Stufe in den Verdampfungsprozess höchstens um 2,5 Prozent, in der Regel jedoch überhaupt nicht, vermindert.

In einer vorteilhaften Ausgestaltung der Erfindung wird von der dem Kraftstoff insgesamt zugeführten Stoffmenge an Sauerstoff ein Anteil zwischen 25 und 100 Prozent, vorzugsweise zwischen 35 und 50 Prozent, für die Verdampfung verwendet.

Unter der insgesamt zugeführten Stoffmenge an Sauerstoff ist die Summe der über das sekundäre Medium und über das Oxidationsmittel zugeführten Stoffmengen an Sauerstoff zu verstehen.

Bei dieser Sauerstoffverteilung wird der Kraftstoff besonders gut verdampft, während gleichzeitig nach dem Durchmischen ein besonders homogenes Kraftstoff-Oxidationsmittel-Gemisch entsteht. Dies führt zu einer vollständigen Umsetzung des Gemisches bei der Reformierung und unterbindet die Bildung kohlenstoffhaltiger Ablagerungen, die den Katalysator deaktivieren würden.

Im Rahmen der Erfindung wurde eine Mischkammer verwendet, die einen Verdampfer und mindestens einen damit verbundenen zweiten Bereich aufweist. Diese Mischkammer ist für die vollständige Verdampfung eines Kraftstoffs nach dem erfindungsgemäßen Verfahren und hier insbesondere für die Herstellung eines Kraftstoff-Oxidationsmittel-Gemisches vorgesehen. Es wurde erkannt, dass bei Verwendung dieser Mischkammer die erfindungsgemäße Verdampfung und die erfindungsgemäße Durchmischung des Kraftstoffs mit dem Oxidationsmittel in besonders vorteilhafter Weise zusammenwirken. Vorteilhaft ist das Oxidationsmittel mit dem bei der Verdampfung verwendeten sekundären Medium stofflich identisch. Es kann der Mischkammer dann zusammen mit dem sekundären Medium oder aber separat zugeführt werden. Im letzteren Fall lassen sich die zweite Stufe der Verdampfung und die Durchmischung unabhängig voneinander steuern, obwohl für beide Zwecke das gleiche Oxidationsmittel verwendet wird. Hierzu weist die Mischkammer vorteilhaft voneinander unabhängige Düsen für die Zufuhr des sekundären Mediums und für die Zufuhr des Oxidationsmittels auf.

Die Düsen können jeweils als Düsenkränze ausgebildet sein.

Für die Verdampfung bewirkt dies eine homogene Temperaturverteilung in der sekundären Verdampfungszone. Die Durchmischung wird durch diese Maßnahme homogener.

Vorteilhaft weist die Mischkammer zwischen dem Verdampfer und dem zweiten Bereich eine Verengung auf. In der Verengung kommt es zur Beschleunigung der Strömung und damit zur Intensivierung der Turbulenz, was für schnelle Vermischung vorteilhaft ist. Außerdem wird damit räumlich der Verdampferteil von dem zweiten Bereich abgetrennt.

### Spezieller Beschreibungsteil

Nachfolgend wird der Gegenstand der Erfindung anhand von Figuren näher erläutert, ohne dass der Gegenstand der Erfindung dadurch beschränkt wird.

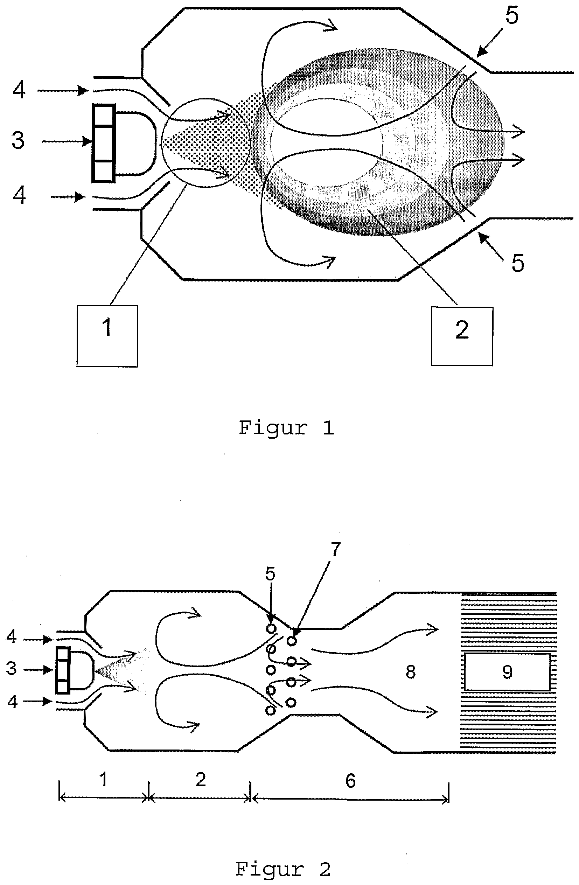

Figur 1 zeigt ein Beispiel für eine Vorrichtung (Verdampfer), mit der das Verfahren durchgeführt werden kann. Die Pfeile geben die typischen Strömungsprofile der Betriebsstoffe während des Betriebes an. Der Verdampfer, umfassend die primäre Verdampfungszone 1 und die sekundäre Verdampfungszone 2, enthält Düsen für den flüssigen Kraftstoff 3 und für das primäre Medium 4, die in unmittelbarer Nähe zueinander angeordnet sind. Dadurch kann das primäre Medium 4 besonders intensiv mit dem Kraftstoff 3 durchmischt werden, wobei der größte Teil in der primären Verdampfungszone 1 verdampft. Die Düsen sind zudem so angeordnet, dass die Düse für den Kraftstoff 3 im Betrieb vom primären Medium 4 umströmt wird. Dies verhindert einen möglichen Tropfenniederschlag an der Düse für den Kraftstoff 3, was zu einer Rußbildung und zu einer Verstopfung dieser Düse führen könnte.

Die Düsen für das sekundäre Medium 5 sind so angeordnet, dass das sekundäre Medium dem Kraftstoff entgegen strömt. Die Stoffaustrittsrichtung der Düsen und der Druck, mit dem das sekundäre Medium aus ihnen austritt, entscheiden darüber, wo sich die sekundäre Verdampfungszone 2 ausbildet. Der verdampfte Kraftstoff kann aus dem Verdampfer in einen Durchmischungsbereich 6 strömen, in dem er mit weiterem Oxidationsmittel 7 durchmischt wird, ohne mit diesem zu reagieren.

Figur 2 zeigt ein Ausführungsbeispiel für eine erfindungsgemäße Mischkammer. Die Pfeile geben die typischen Strömungsprofile der Betriebsmittel während des Betriebs an. Räumlich beabstandet von einem erfindungsgemäßen Verdampfer, umfassend die primäre Verdampfungszone 1 und die sekundäre Verdampfungszone 2, als erstem Bereich befindet sich der zweite Bereich, in dem der verdampfte Kraftstoff homogen mit Oxidationsmittel durchmischt wird (Durchmischungsbereich 6). Zwischen dem ersten und dem zweiten Bereich sind ein Düsenkranz zur Versorgung des ersten Bereichs mit sekundärem Medium 5 und ein weiterer Düsenkranz zur Versorgung des zweiten Bereichs mit Oxidationsmittel 7 vorgesehen. Am rechten Ende des zweiten Bereichs ist der Katalysator 9 eines autothermen Reformers eingezeichnet, dem das in der Mischkammer hergestellte Kraftstoff-Oxidationsmittel-Gemisch 8 typischerweise zugeführt wird.

Bei einer konkreten Ausführung des Verfahrens zur Verdampfung wurde Aral Ultimate Diesel verwendet, der ein O₂/C-Verhältnis von 0,47 und ein H₂O/C-Verhältnis von 1,90 aufweist. Die nachgeschaltete Reformierung liefert bei einer Verdampfung des Kraftstoffs nur mit der ersten Stufe ein trockenes Produktgas mit 35,7 Volumenprozent Wasserstoff. Bei der erfindungsgemäßen zweistufigen Verdampfung ist die Wasserstoffkonzentration im Produktgas bei einer Messgenauigkeit von 0,5 Volumenprozent nicht messbar vermindert.

Bei einer weiteren konkreten Ausführung des Verfahrens wird eine Mischkammer mit nachgeschaltetem Katalysator verwendet.

Diese Mischkammer weist einen inneren Durchmesser von 53 mm und eine Länge von 150 mm von der Einspritzdüse bis zum Katalysator auf. Als Oxidationsmittel wird Luft eingedüst, wobei hierfür je 1 mm Durchmesser 30 Bohrungen angebracht sind. Die Gesamtanordnung aus Mischkammer und Katalysator liefert genügend Brenngas für eine Brennstoffzelle der 5-kW-Leistungsklasse. Sie verbraucht 1,3 kg/h Kraftstoff (Diesel oder Kerosin), 5,8 kg/h Luft und 3,1 kg/h Wasser.

## Patentansprüche

1. Verfahren zum Verdampfen eines flüssigen Kraftstoffs in zwei Stufen mit den Schritten:
a. der Kraftstoff wird in einer ersten Stufe in einer primären Verdampfungszone durch Wärmekontakt mit einem primären Medium teilweise verdampft;
b. dem Kraftstoff wird in einer von der primären Verdampfungszone räumlich beabstandeten sekundären Verdampfungszone ein oxidierendes sekundäres Medium zugeführt,
- wobei ein Teil des bereits verdampften Kraftstoffs teilweise oxidiert wird,
- wobei sich der noch unverdampfte Kraftstoffanteil an dieser Reaktion nicht beteiligt und
- wobei die exotherme, nur teilweise Oxidation beim Erreichen einer maximalen Temperatur zwischen 500 °C und 600 °C unterbrochen wird, und
- wobei wenigstens ein Teil des noch unverdampften Kraftstoffs durch die exotherme Reaktionswärme der nur teilweisen Oxidation in einer zweiten Stufe verdampft wird.

2. Verfahren nach Anspruch 1, **gekennzeichnet durch** überhitzten Wasserdampf als primäres Medium.

3. Verfahren nach einem der Ansprüche 1 bis 2, **dadurch gekennzeichnet,**
**dass** insgesamt zwischen 50 und 99 Prozent, insbesondere zwischen 70 und 90 Prozent der gesamten Kraftstoffmenge verdampft werden.

4. Verfahren nach einem der Ansprüche 1 bis 3, **gekennzeichnet durch** Luft als oxidierendes sekundäres Medium.

5. Verfahren nach einem der Ansprüche 1 bis 4, **dadurch gekennzeichnet,**
**dass** der Kraftstoff fein zerstäubt in die primäre Verdampfungszone eingebracht wird.

6. Verfahren nach einem der Ansprüche 1 bis 5, **dadurch gekennzeichnet,**
**dass** das primäre Medium vor dem Kontakt mit dem Kraftstoff eine Temperatur unterhalb von 700 °C, insbesondere unterhalb von 500 °C, aufweist.

7. Verfahren nach einem der Ansprüche 1 bis 6, **dadurch gekennzeichnet,**
**dass** das sekundäre Medium dem Kraftstoff entgegen strömt.

8. Verfahren nach einem der Ansprüche 1 bis 7, **dadurch gekennzeichnet, dass** zur Herstellung eines Kraftstoff-Oxidationsmittel-Gemisches für einen Reformer
- der Kraftstoff durch ein zweistufiges Verfahren gemäß einer der Ansprüche 1 bis 7 in einem ersten Bereich verdampft und teilweise oxidierte wird und
- in einem vom ersten Bereich räumlich beabstandeten, zweiten Bereich mit einem Oxidationsmittel durchmischt wird.

9. Verfahren nach Anspruch 8, **dadurch gekennzeichnet, dass** als Oxidationsmittel dasselbe Medium, wie als oxidierendes, sekundäres Medium eingesetzt wird.

10. Verfahren nach einem der Ansprüche 8 bis 9, bei dem von der dem Kraftstoff insgesamt zugeführten Stoffmenge an Sauerstoff ein Anteil zwischen 25 und 100 Prozent, vorzugsweise zwischen 35 und 50 Prozent, für die Verdampfung verwendet wird.

## Claims

1. Method for evaporating a liquid fuel in two stages with the steps:
a. the fuel is partly evaporated in a first stage in a primary evaporation area by heat contact with a primary medium;
b. the fuel is supplied with an oxidising secondary medium in a secondary evaporation area spatially at a distance from the primary evaporation area,
- in which a part of the fuel already evaporated is partly oxidised,
- in which the part of the fuel still not evaporated is not involved in this reaction and
- in which the only partial exothermic oxidation is stopped on reaching a maximum temperature of between 500° C and 600° C, and
- in which at least a part of the fuel still not evaporated is evaporated in a second stage by the exothermic reaction heat of the only partial oxidation.

2. Method according to claim 1, **characterised by** superheated steam as the primary medium.

3. Method according to one of claims 1 to 2, **characterised in that** in total between 50 and 99 percent, particularly between 70 and 90 percent of the total amount of fuel is evaporated.

4. Method according to one of claims 1 to 3, **characterised by** air as the oxidising secondary medium.

5. Method according to one of claims 1 to 4, **characterised in that** the fuel is introduced into the primary evaporation area finely atomised.

6. Method according to one of claims 1 to 5, **characterised in that** the primary medium has a temperature below 700° C, particularly below 500° C, before contact with the fuel.

7. Method according to one of claims 1 to 6, **characterised in that** the secondary medium flows against the fuel.

8. Method according to one of claims 1 to 7, **characterised in that** for producing a fuel oxidising agent mixture for a reformer
- the fuel is evaporated and partly oxidised in a first area by a two-stage process according to one of claims 1 to 7 and
- mixed with an oxidising agent in a second area spatially at a distance from the first area.

9. Method according to claim 8, **characterised in that** the same medium is used for the oxidising agent as for the oxidising secondary medium.

10. Method according to one of claims 8 to 9, in which a proportion of between 25 and 100 percent, preferably between 35 and 50 percent of the total amount of oxygen supplied to the fuel is used for evaporation.

## Revendications

1. Procédé d'évaporation d'un combustible liquide en deux étapes, ayant les stades :
a. on évapore, en partie, le combustible, dans une première étape, dans une zone d'évaporation primaire par contact thermique avec un fluide primaire ;
b. on apporte un fluide secondaire oxydant au combustible, dans une zone d'évaporation secondaire, à distance dans l'espace de la zone d'évaporation primaire,
- dans lequel on oxyde, en partie, une partie du combustible déjà évaporé,
- dans lequel la proportion de combustible, qui n'est pas encore évaporé, ne participe pas à cette réaction et
- dans lequel on interrompt l'oxydation exothermique seulement partielle, lorsqu'une température maximum comprise entre 500°C et 600°C est atteinte et
- dans lequel on évapore, dans une deuxième étape, par la chaleur de réaction exothermique de l'oxydation seulement partielle, au moins une partie du combustible encore non évaporé.

2. Procédé suivant la revendication 1, **caractérisé par** de la vapeur d'eau surchauffée, comme fluide primaire.

3. Procédé suivant l'une des revendications 1 à 2, **caractérisé en ce que** l'on évapore, dans l'ensemble, entre 50 et 99 pour cent, notamment entre 70 et 90 pour cent, de la quantité totale du combustible.

4. Procédé suivant l'une des revendications 1 à 3, **caractérisé par** de l'air, comme fluide secondaire oxydant.

5. Procédé suivant l'une des revendications 1 à 4, **caractérisé en ce que** l'on introduit, dans la zone d'évaporation primaire, le combustible à l'état finement pulvérisé.

6. Procédé suivant l'une des revendications 1 à 5, **caractérisé en ce que** le fluide primaire a, avant le contact avec le combustible, une température inférieure à 700°C, notamment inférieure à 500°C.

7. Procédé suivant l'une des revendications 1 à 6, **caractérisé en ce que** le fluide secondaire s'écoule à contre-courant du combustible.

8. Procédé suivant l'une des revendications 1 à 7, **caractérisé en ce que**, pour produire un mélange de combustible et d'agent oxydant pour un reformeur,
- on évapore et oxyde en partie le combustible, par un procédé en deux étapes suivant l'une des revendications 1 à 7, dans une première zone et
- on le mélange à un agent oxydant dans une deuxième zone à distance dans l'espace de la première zone.

9. Système suivant la revendication 8, **caractérisé en ce que** l'on utilise comme agent oxydant le même fluide que le fluide secondaire oxydant.

10. Système suivant l'une des revendications 8 à 9, dans lequel on utilise pour l'évaporation, de la quantité d'oxygène envoyée dans l'ensemble au combustible, une proportion comprise entre 25 et 100 pour cent, de préférence entre 35 et 50 pour cent.
